# EUROPEAN PATENT SPECIFICATION

(11) **EP 4 058 738 B1**
(45) Date of publication and mention of the grant of the patent: **06.03.2024**
(21) Application number: 20811073.4
(22) Date of filing: 13.11.2020
(51) Int. Cl.: F24F 5/00, F24F 1/16, F24F 1/18, F24F 11/86, F24F 140/60

(54) **IMPROVEMENTS IN OR RELATING TO HEATING, VENTILATION AND AIR CONDITIONING SYSTEMS**
VERBESSERUNGEN AN HEIZUNGS-, LÜFTUNGS- UND KLIMAANLAGEN ODER IM ZUSAMMENHANG DAMIT
AMÉLIORATIONS APPORTÉES OU SE RAPPORTANT À DES SYSTÈMES DE CHAUFFAGE, DE VENTILATION ET DE CLIMATISATION

(30) Priority: 14.11.2019 GB 201916575
(43) Date of publication of application: 21.09.2022
(73) Proprietor: Global Partnerships Ltd, St. Ives Cambridgeshire PE27 3LF (GB)
(72) Inventor: MASCARENAS, Malcolm Anthony, Sudbury Suffolk CO10 0SA (GB); NEWLAND, Christopher Paul, Cambridgeshire PE27 3LF (GB)
(74) Representative: Stratagem IPM Limited
(86) International application number: PCT/GB2020/052905
(87) International publication number: WO 2021/094779

(56) References cited:
- WO-A1-2007/068054
- WO-A1-2008/110018
- CN-A- 102 997 497
- CN-B- 102 297 488
- CN-U- 204 880 849
- CN-U- 206 113 187
- CN-Y- 200 979 313
- GB-A- 2 404 227
- JP-A- H11 237 138
- JP-A- 2002 147 337
- JP-U- S58 139 588

## Description

This invention relates to improvements in or relating to heating, ventilation and air conditioning (HVAC) systems, and in particular, to HVAC systems comprising a renewable energy source.

HVAC systems require a great deal of energy, which is most commonly obtained from electricity. Such systems are used in both hot and cold climates in order to regulate the temperature of a given environment, such as the internal temperature of a room or building. Doing so can often require vast quantities of energy and therefore it is a desirable for HVAC systems to utilise renewable energy sources wherever possible.

In particular, air conditioning systems required a large amount of energy to power a cooling fan and a compressor. The compressor is a fundamental component of an air conditioning system and is configured to compress a fluid, often referred to as a coolant, before it enters a condensing coil. The condensing coil is configured to facilitate the transfer of heat (absorbed from a space or area to be cooled) to the external environment. The compressor therefore increases the pressure and, more importantly, temperature of the fluid. This results in a greater temperature differential between the fluid and the external environment, hence increasing the efficiency with which thermal energy can be transferred from the fluid to the surrounding air. However, the electrical energy required to operate an air conditioning system can deter many users as a result of their financial and/or environmental impact.

The condenser coils are often located within a housing on an external surface of a building. In hot countries, the housing can attract radiant heat from the sun and hence the external air surrounding the condenser coil can be well above the mean external air temperature. This effect reduces the temperature differential between the condenser coil and external air surrounding it, which in turn reduces the efficiency with which thermal energy can be transferred from the fluid to the external air. As a consequence, many air conditioning systems comprise a fan within the condenser housing. These fans require constant power which results in a further increased energy consumption. Furthermore, these fans often do not aim to cool the entire housing and therefore their benefits are limited.

Furthermore, air conditioning systems can be operated in reverse, thus reversing the transfer of energy and providing heat to a space.

CN102297488B discloses a ground source wind energy air conditioner system formed by a vertical axis windmill and an air conditioning method, wherein the system comprises a vertical axis windmill, a compressor system, a wind source pipeline, a water well exchanger, a solar water heater, an air conditioner system and a system pipeline. The output of the vertical axis windmill is connected with the compressor system; and the output of the compressor system is connected with the wind source pipeline, the water well exchanger, the solar water heater and the air conditioner system through the system pipeline.

It is against this background that the present invention has arisen.

According to the present invention there is provided a HVAC system comprising: a compressor and a vertical axis wind turbine, wherein the vertical axis wind turbine is configured to provide rotational energy directly to the compressor. The system further comprises an energy conversion unit configured to convert excess rotational energy generated by the vertical axis wind turbine into electrical energy, or electrical energy into rotational energy for use within the compressor. The system further comprises a control unit configured to ensure that the total amount of rotational energy supplied to the compressor is maintained within a predetermined range. The compressor is configured to receive rotational energy from at least one of the vertical axis wind turbine and the energy conversion unit.

In addition, there is provided a HVAC system comprising a compressor configured to receive rotational energy from at least one of a vertical axis wind turbine configured to provide rotational energy directly to the compressor and an energy conversion unit configured to convert electrical energy into rotational energy, the system further comprising a control unit configured to ensure that the total amount of rotational energy supplied to the compressor is maintained within a predetermined range.

Using the vertical axis wind turbine to provide rotational energy directly to the compressor removes the necessity for electricity to be generated and used to power the compressor. The single stage process of the present invention, wherein the energy remains as rotational energy throughout, increases the efficiency of the systems compared to a multi-staged equivalent, wherein energy is converted from rotational energy to another form of energy, such as electrical energy, thus resulting in energy losses inevitably occurring at each stage.

Furthermore, the present invention significantly reduces the total electrical energy required by the system and in one embodiment, enables the system to be self-contained and/or to operate 'off grid' using a renewable energy source. Additionally, a vertical axis wind turbine is well known to be more compact and quieter than a horizontal axis wind turbine, which provides fewer limitations when choosing a suitable location to situate the present invention.

The energy conversion unit may be used as a motor. The energy conversion unit, when acting as a motor, converts electrical energy into rotational energy. Alternatively, the energy conversion unit may be used as a generator. The energy conversion unit, when acting as a generator, converts rotational energy into electrical energy.

The energy conversion unit may be initially used as a motor to overcome frictional forces within the turbine upon start up. Alternatively, or in addition, the energy conversion unit may be used to supplement the energy provided by the vertical axis wind turbine in cases where there is insufficient wind to rotate the vertical axis wind turbine at a predetermined number of revolutions per minute. The energy conversion unit may be operably connected to an electrical grid, power source and/or a battery configured to supply electricity to the energy conversion unit.

The energy conversion unit may be configured to ensure the system remains active when there is no wind. Furthermore, the energy conversion unit may assist with partial energy during situations where there are different partial states of wind and/or not enough wind energy for the system to operate. The energy conversion unit may be configured to 'top up' the energy by the available wind strength in order to ensure that the minimum amount of additional energy is required from external sources.

Alternatively, the energy conversion unit may withdraw energy from the vertical axis wind turbine if more than the predetermined amount of energy is being generated by the vertical axis wind turbine. Accordingly, the energy conversion unit may be used to regulate the rotational energy generated by the vertical axis wind turbine.

The control unit is configured to ensure that the total amount of rotational energy supplied to the compressor is maintained within a predetermined range. The control unit may ensure the vertical axis wind turbine rotates at a predetermined number of revolutions per minute. In addition, the control unit may monitor and/or adjust the rotational energy supplied to the compressor by the energy conversion unit. In additional, the control unit may monitor the amount of rotational energy generated by the wind turbine.

The control unit may also monitor and/or adjust the rotational energy supplied to the compressor by the vertical axis wind turbine. The control unit may determine the difference in the amount of energy being generated by the wind turbine and the amount of energy required by the compressor. The control unit may then generate an output as a result of the determined difference, wherein the output may be at least one of: increasing the amount of energy being supplied to the compressor by the energy conversion unit, reduce the amount of energy being supplied to the compressor by the energy conversion unit, stopping the energy conversion unit from supplying energy to the compressor and limiting the amount of energy being supplied to the compressor from the vertical axis wind turbine. Consequently, the energy output of the energy conversion unit may be controlled via the control unit.

The system may comprise a plurality of modes. The system may comprise at least three modes. For example, the system may comprise an air conditioning mode, a heat generation mode and/or an electrical energy generation mode. Under a normal operational cycle the system may operate in one or more of these modes, or even a combination of these modes, at different times depending on the prevailing wind conditions and the user's energy requirements.

The control unit may include a number of sensors, including temperature sensor to monitor the temperature or the room or space that is under temperature control from the system.

There may be additional temperature sensors monitoring the external temperature. There may also be an anemometer measuring the wind speed in the vicinity of the turbine blades.

The control unit may further include a temperature set control that enables the user to input a desired temperature for the room or space to be cooled or heated. The user may provide a standard temperature cycle that should be modelled on a daily basis. Alternatively or in addition, the user may override the pre-set temperature cycle to request immediate cooling or heating on the basis of their instant requirement.

In relation to the daily temperature cycle, the control unit may also store parameters relating to the acceptable hours of operation of the system. For example, it may be set to operate to provide a relatively small amount of heating or cooling over a protracted period. Conversely, it may be set to be active only in a relatively small time window in relation to cooling or heating the room to a target temperature by a given time.

The preferred mode of operation will dictate how the system utilises the energy storage, such as the battery. For example, if it is windy overnight, but the user has specified that the heating/cooling of the room cannot commence until, say 6am, energy harvested from the wind, overnight, will be stored, either in a battery or supplied to the electrical grid and then, at the predetermined threshold time for heating or cooling to commence, the temperature in the room will be sensed and the HVAC system will operate to either heat or cool the room using, primarily, energy directly from the wind turbine, and additionally, as required from the battery and/or the electrical grid to achieve the target temperature within a predetermined acceptable time frame.

The system may comprise at least one output configured to receive excess energy. The at least one output may be at least one of: an electrical grid, a national grid, a local grid and an electronic device.

The HVAC system may further comprise a gearbox. The gearbox may comprise an input shaft operably connected to the vertical axis wind turbine and an output shaft operably connected to the compressor. The input shaft may be operably connected to the output shaft via at least one pair of gears. Consequently, the gearbox may be mechanically driven via rotational energy directly from the vertical axis wind turbine.

The at least one pair of gears may be configured to rotate the output shaft at a greater number of revolutions per minute (rpm) than the input shaft. The gearbox may comprise an input to output gear ratio of at least 2:1. An input to output gear ratio of 2:1 may result in the output shaft rotating at twice the RPM of the input shaft. In some embodiments, the gear ratio may be at least 3:1, 5:1, 8:1 10:1, 12:1 or 15:1.

In some embodiments, the most preferable gear ratio is 10:1. Consequently, the output shaft of the gearbox may rotate 10 times faster than the RPM of the vertical axis wind turbine and the gearbox input shaft.

The gearbox may comprise a clutch configured to adjust the gear ratio. The clutch may be electronically driven.

The gearbox may be configured to selectively engage a forward gear configured to rotate the output shaft in a first direction or a reverse gear configured to rotate the output shaft in a second direction.

The system may further comprise a conduit configured to contain a fluid for undergoing an evaporation and condensation cycle. The fluid may be a coolant. The conduit may be in fluid communication with the compressor. The compressor may be configured to compress a fluid located with the conduit. The compressor may comprise a pump. The pump may be configured to generate fluid flow within the conduit. The pump may be mechanically driven. The pump may be configured to generate fluid flow in either direction within the conduit. This enables the system to be operated as a means for heating or cooling a space. The pump may be driven by the output shaft of the gearbox. During use, the pump may require the output shaft of the gearbox to rotate at 1500 rpm. Alternatively, during use, the pump may require the output shaft of the gearbox to rotate at up to 500 rpm, 750 rpm, 1000 rpm, 1250 rpm, 1500 rpm, 1750 rpm, 2000 rpm, 2500 rpm or 3000 rpm.

The system may further comprise a battery configured to store excess energy produced by the vertical axis wind turbine. The stored energy may be sold and/or the battery may release energy back into the system when required, for example to power the compressor, pump and/or electronic clutch in the absence of sufficient wind. Alternatively, or in addition, the compressor, pump and/or clutch may be configured to receive power from an external source. The energy conversion unit may be operably connected to the battery. The energy conversion unit may be configured to convert electrical energy provided by the battery into rotational energy for use within the compressor.

The vertical axis wind turbine may comprise a central shaft rotatable about a longitudinal axis. The vertical axis wind turbine may comprise a plurality of blades mechanically coupled to the shaft.

A plurality of blades mechanically coupled to a rotatable shaft is an efficient way in which to produce rotational energy to power the compressor. The mechanical coupling may be in the form of a strut. The plurality of blades may be used to ensure that at least one blade is always orientated into the prevailing wind direction and is able to produce a rotational movement. The resulting turbine may therefore be very quiet, compact and may utilise wind energy from any direction. Furthermore, a vertical axis wind turbine results in a lower overturning moment than an equivalent horizontal axis wind turbine configured to generate the same amount of rotational energy.

The energy conversion unit, when acting as a motor, may be configured to rotate the vertical axis wind turbine about the longitudinal axis at a predetermined number of revolutions per minute. For example, the energy conversion unit may be configured to convert electrical energy into mechanical energy, such as rotational energy, thus simulating an electrical motor.

The energy conversion unit may also be used to provide the system with the total amount of required energy. This ensures that the compressor, pump and/or clutch can constantly receive power and that the HVAC system can function continuously. The energy conversion unit may receive at least a portion of the energy stored within the battery.

At least a portion of the energy stored within the battery may be used during system start up in order to rotate the vertical axis wind turbine to a predetermined minimum number of revolutions per minute.

The predetermined minimum number of revolutions per minute (rpm) of the vertical axis wind turbine may be 5, 10, 20, 30, 40, 50, 60, 80, 100 or more than 100 rpm. Preferably, the predetermined minimum number of revolutions per minute (rpm) of the vertical axis wind turbine may be 40 rpm.

In some embodiments the predetermined minimum number of revolutions per minute (rpm) of the vertical axis wind turbine may be 100, 120, 130, 140, 150, 160, 180, 200, 220, 250 or more than 250 rpm. In some embodiments, the predetermined minimum number of revolutions per minute (rpm) of the vertical axis wind turbine may be 150 rpm. Alternatively, or in addition, the optimal number of revolutions per minute (rpm) of the vertical axis wind turbine may be 150 rpm.

The energy conversion unit may be used as a generator. The energy conversion unit may be configured to covert rotational energy generated by the vertical axis wind turbine into electrical energy. Alternatively, or in addition, the energy conversion unit may be configured to covert excess rotational energy generated by the vertical axis wind turbine into electrical energy. The energy conversion unit may be operably connected to the battery. The battery may be configured to store electrical energy generated by the energy conversion unit. The energy conversion unit may comprise an electrical brake configured to store energy within the battery. Alternatively, or in addition, the energy conversion unit may be connected to the compressor, pump and/or clutch.

The energy conversion unit may be integrated into the compressor. Doing so may enable the mechanical transmission to alternate between the two components easily and efficiently. Furthermore, integrating the energy conversion unit into the compressor provides for a smaller overall packaging size.

If air conditioning, heating and/or ventilation is not required but there is wind present, the wind turbine may be used to generate electrical energy, via the energy conversion unit, which may subsequently be stored in the battery for future use or may be sold, for example to a local or national electrical grid. Alternatively, the system may comprise one or more secondary devices configured to utilise the excess energy that is generated when the HVAC system isn't required.

The system may further comprise a heat exchange unit in fluid communication with the compressor via the conduit. The heat exchange unit may comprise a plurality of fins and/or protrusions located on a surface of a main body or wall. The heat exchange unit may be located within the central shaft of the vertical axis wind turbine. Alternatively, the heat exchange unit may be the central shaft of the vertical axis wind turbine.

The central shaft and/or heat exchange unit may be extruded. The central shaft and/or heat exchange unit may comprise a longitudinal axis along which it may be extruded. The longitudinal axis may be substantially vertical when the HVAC system is in use. The central shaft and/or heat exchange unit may be manufactured from aluminium.

The central shaft and/or heat exchange unit may further comprise at least one conduit located within its wall. There may be a plurality of conduits located with a wall of the central shaft and/or heat exchange unit. Each conduit may be configured to receive the coolant. Moreover, each conduit may be configured to dissipate heat to the wall of the central shaft and/or heat exchange unit.

The central shaft and/or heat exchanger may comprise a plurality of fins located on an internal surface of the wall. The internal fins may be vertical. Alternatively, or in addition, the internal fins may be substantially parallel with the longitudinal axis of the central shaft and/or heat exchange unit. The internal fins may be configured to draw cool air up through the heat exchange unit and expel the hot air out from the heat exchange unit. Consequently, the need for pumping or other forced cooling in the heat exchange unit may be avoided. Alternatively, or in addition, all cooling may be derived from natural sources.

The heat exchange may comprise a plurality of fins located on an external surface of the wall. The external fins may be horizontal. The external fins may be annular. Alternatively, or in addition, the external fins may be substantially perpendicular to the longitudinal axis of the central shaft and/or heat exchange unit. Advantageously, each external fin may shade, or partially shade, the fin below from direct sunlight, thus reducing the radiant energy gained by the external surface of the heat exchange unit.

The fluid may be a liquid or a gas and/or the fluid may be a coolant such as Ammonia. Ammonia is not a Greenhouse Gas and in some systems a Coefficient of Performance (COP) of 3 is obtained. The system may therefore become a Zero Carbon sustainable system if used with a refrigeration fluid such as Ammonia.

During a heating cycle, the COP may be approximately 3.5. Conversely, during a cooling cycle, the COP may be approximately 2.5. However, in some embodiments, the COP during a heating cycle may be up to 2, 3, 4, or 5. Alternatively, or in addition, the COP during a cooling cycle may be up to 1, 2, 3 or 4. The COP of a heating cycle may be approximately 1 greater than the COP of a cooling cycle.

The fluid may be a renewable gas. The fluid may comprise propane, ammonia, nitrogen or carbon dioxide. The fluid may be pressurized. The fluid may be pressurizes to at least 10 bar, 15 bar, 20 bar, 23 bar, 25 bar, 28 bar, 30 bar, 35 bar or more than 35 bar.

The fluid in the conduit may flow in a first direction in order remove heat from a space. Alternatively, the fluid in the conduit may flow in a second direction in order to provide heat to a space. The second direction may be the opposite direction to the first direction. Consequently, the system may be configured to either heat or cool a space. The system may also be configured to generate electricity to use and/or store.

As previously disclosed, the system may comprise a conduit configured to contain a fluid for undergoing an evaporation and condensation cycle, wherein the conduit may be in fluid communication with the compressor. At least a portion of the conduit may be located in at least a portion of at least one of the blades.

Locating a portion of the conduit in at least a portion of at least one of the blades may allow thermal energy to more efficiently transfer between the fluid within the conduit and the surrounding air. Vertical axis wind turbines are most commonly located on a roof of a building and hence are unsheltered from the wind, which will increase the efficiency with which thermal energy is transferred to/from the conduit.

Additionally, the rotational movement of the vertical axis wind turbine will significantly aid the transfer of thermal energy between the fluid and the surrounding air. This may remove the need for the fan that is commonly found adjacent to a condenser coil or heat exchange unit in conventional air conditioning systems. The present invention therefore may remove the need for a "cooling fan", which is typically the greatest use of power in a conventional air conditioning system after the compressor.

Furthermore, locating a portion of the conduit in at least a portion of at least one of the blades may enable the fluid to leave the condensing coil at a lower temperature than was previously achievable and hence further increase the efficiency of the air conditioning system. This may reduce the amount of work required by a thermostatic expansion valve (TXV) of the air conditioning system.

At least a portion of the conduit may be coterminous with at least a portion of at least one of the blades. This configuration enables the most efficient transfer of heat between the fluid in the conduit and the outside air as the thickness, and hence thermal resistivity, of material separating the fluid from the external air is minimised. Furthermore, locating the conduit inside the components of the vertical axis wind turbine will maintain the aerodynamic shape and hence will not significantly affect the efficiency of the turbine itself.

At least a portion of the conduit may be tortuous. A tortuous conduit elongates the conduit length and hence maximises the time available for the fluid and external air to transfer energy. The amount of heat transfer between the fluid and the external air may therefore be maximised.

A portion of the conduit may be located in at least one mechanical coupling member. Locating a portion of the conduit in at least one mechanical coupling member or strut enables heat to efficiently be transferred between the conduit and the surrounding air. For example, the speed of the tips of the struts may reach over 100mph, which is far greater than the speed of the blades of a cooling fan on a conventional air conditioning system. Alternatively, locating a portion of the conduit in at least one strut may allow at least one heat exchanger to be mounted on the tip of each strut in order to dissipate the thermal energy. A plurality of heat exchangers may be used. For example, a heat exchanger may be located on each of the upper and lower surfaces of each strut.

A portion of the conduit may be located within a plurality of the blades. Providing a portion of the conduit in a plurality of blades may further increase the possible heat loss from the fluid that can be achieved within the vertical axis wind turbine. The base of the central shaft may be bifurcated into a first fluid channel and a second fluid channel in order to separate a first fluid channel comprising warmer fluid from a second fluid channel comprising a cooler fluid. The separation between the first and second channels may be insulated.

There may be unidirectional flow of the fluid in each blade and/or mechanical coupling member, which may also be referred to as a 'strut'. Alternatively, the blade and/or mechanical coupling member may be bifurcated and hence allow for bidirectional flow of the. Each blade and/or mechanical coupling member may be separated into a plurality of channels to create a tortuous pathway for the fluid to increase the efficiency with which the vertical axis wind turbine can transfer thermal energy between the fluid and the surrounding air.

The system may further comprise a heat exchange unit in fluid communication with the conduit, wherein the heat exchange unit is located, at least in part, on/in the vertical axis wind turbine. Providing a heat exchange unit on/in the vertical axis wind turbine may increase the robustness of the system and the efficiency with which heat may be transferred between the fluid and the surrounding air.

Alternatively, or in addition, the heat exchange unit may be located directly below the vertical axis wind turbine. Doing so ensures that the heat exchange unit is located, at least in part, in an area exposed to free flowing air. This location may be the roof of the building. Locating the heat exchange unit directly beneath the vertical axis wind turbine will also increase the elevation of the wind turbine, hence increasing the wind speed it will be subjected to and consequently improving the efficiency of the system.

Locating the heat exchange unit directly beneath the vertical axis wind turbine may also increase the air flow around the heat exchange unit. The vertical axis wind turbine may create a turbulent air flow within its vicinity and this may consequently improve the efficiency of the heat exchange unit.

In some embodiments, the heat exchange unit is located in the vicinity of the vertical axis wind turbine. In some embodiments, the heat exchange unit is located away from the vertical axis wind turbine.

The system may also comprise at least one rotating joint located between the vertical axis wind turbine and the compressor. The rotating joint may be located between the vertical axis wind turbine and the gearbox.

The system may also comprise at least one rotating fluid joint located between the shaft of the vertical axis wind turbine and the compressor. In some embodiments, the rotating fluid joint may be located between the shaft of the vertical axis wind turbine and the gearbox. The rotating joint may be the rotating fluid joint. A rotating fluid joint enables fluid to flow from the compressor and into the vertical axis wind turbine when in use, which in turn enables the fluid to flow within the vertical axis wind turbine and enables the compressor to be powered by the turbine simultaneously.

Alternatively, there may be two rotating joints. The first rotating joint may be located after the fluid is compressed within compressor, i.e. before the rotating part of the system. The second rotating joint may be located where the fluid exits the vertical axis wind turbine, i.e. before the fluid flows out of the base of the central shaft. Multiple fluid joints may be used to ensure the warmer fluid within the vertical axis wind turbine and cooler fluid within the vertical axis wind turbine remain separate.

The system may comprise an evaporator in fluid communication with the heat exchange unit via the conduit. The system may further comprise an evaporator in fluid communication with the conduit. The evaporator may be configured to transfer thermal energy from the air within a building to the fluid. In some embodiments, the evaporator may be configured to absorb thermal energy, or heat, from a space to be cooled.

The vertical axis wind turbine may be located on a roof of the building.

The control unit may be configured to monitor the performance of the system. The control unit may be configured to monitor and/or adjust at least parameter, wherein the at least one parameter may be at least one of the fluid temperature, fluid pressure, amount of rotational energy generated, amount of rotational energy being used, amount of electricity being generated, amount of electricity being used. Furthermore, the control unit may be used to monitor and/or adjust at least one input or output of the energy conversion unit, vertical axis wind turbine, generator, battery and/or system outlet.

Locating the vertical axis wind turbine on the roof of the building comprising air to be cooled enables the rotational energy generated by the vertical axis wind turbine to be transmitted directly and therefore efficiently to the compressor. The resulting system may be used for localised and self-contained air conditioning of buildings such as in luxury villas or apartments, for example. Locating the vertical axis wind turbine on the roof of the building also increases its likelihood of experiencing free-flowing air, which maximises the amount of energy produced by the turbine and heat energy lost from the fluid.

Due to the compact shape and quiet operation of a vertical axis wind turbine, the vertical axis wind turbine of the present invention can easily be mounted on top of a building. This may reduce the distance that the fluid has to travel between the vertical axis wind turbine and the condenser and/or evaporator, hence increasing the efficiency of the system. Less thermal insulation may also be required on the conduit to keep the fluid warm/cool as a result.

In addition, the external air flowing across the conduit and/or heat exchanger of the present invention may be cooler than the air flowing across the equivalent member of a conventional air conditioning system. These more optimal conditions result from the vertical axis wind turbine being located on the roof of a building and subjected to freely flowing air. In contrast, the air surrounding many traditional air conditioning systems, which are often located near the wall of a building, is sheltered by nearby walls, fences, bushes and other objects. In some cases, this can lead to the air becoming virtually stagnant.

At least a portion of the conduit may be insulated. At least a portion of the conduit located between the vertical axis wind turbine and the evaporator may be insulated. Insulating the conduit between the vertical axis wind turbine and the evaporator reduces the transfer of energy from/into the fluid as it passes from the external environment to the internal environment. For example, when the system is being used to provide heating, the insulated portion of the conduit will prevent the fluid within the conduit from cooling down. The location of the evaporator may be a significant distance away from the vertical axis wind turbine and may require the fluid in the conduit to pass through a variety of warm/hot spaces, such as rooms of a building.

Each of the plurality of blades may comprise an elongate body having an upper end and a lower end, wherein the upper end and the lower end of each blade are rotationally off-set from each other about the longitudinal axis such that each blade has a helical form.

The helical form of the blades ensures that the torque profile of the turbine is smoothed out since a portion of at least one of the three blades is always crossing the ambient wind. The smoothed torque profile also reduces cyclic loading on the turbine components since the turbine is less prone to torque peaks. This reduces the fatigue loading on the components. The design also allows the turbine to exhibit increased performance characteristics at low wind speeds. This makes the turbine of the present invention particularly suitable for placement in urban environments where air flow speeds may be reduced and/or made more turbulent by the presence of buildings and other man-made structures.

The section of the elongate body of each blade, taken perpendicularly to the longitudinal axis, may be shaped as an aerofoil having a leading edge and a trailing edge and comprise a camber line (L) defined between the leading edge and the trailing edge.

This 'wrapping' of the aerofoil section is advantageous, especially for turbines where the camber line length L is large relative to the radius of the vertical axis wind turbine, a design characteristic important for small turbines where the viscous aerodynamic effects may limit the use of short camber line length aerofoil.

The aerofoil may be arcuately shaped such that the camber line (L) lies along a line of constant curvature having a finite radius of curvature, R'.

By varying the radius of curvature R' a vertical axis wind turbine with increased efficiency can be obtained due to the effects of the interaction of the rotation of the vertical axis wind turbine blades and the prevailing wind. Calculations leading to the optimisation the configuration of the blades are known from EP 1649163. The upper and lower ends of each blade may extend past an upper and lower mechanical coupling, respectively, and the upper and lower ends of each blade may be configured to prevent the flow of fluid above and below the upper and lower mechanical coupling, respectively.

The provision of struts as the attachment of the upper and lower mechanical coupling struts part way along the elongate body of each blade is advantageous in that the struts provide more even support to the blade. In particular, the maximum span between the struts is reduced compared to struts provided at the extremities of the blade and thus the bending stresses in the elongate body are reduced. However, the struts may, if desired be positioned at the extremities of the elongate body.

Further, the prevention of fluid in the blade flowing above the upper strut and/or below the lower strut prevents the fluid from becoming stagnant in the extremities of the blade.

Alternatively, the upper and lower end of each blade may extend past an upper and lower mechanical coupling, respectively, and the upper and lower ends of each blade may be at least partially bifurcated.

Bifurcating the upper and lower ends of each blade past the mechanical coupling will ensure that the fluid does not stagnate in the extremities of each blade where fluid flow may be restricted. The plurality of fluid channels will ensure a unidirectional flow path is created and hence the efficiency of the system can be increased as a result of the increases surface area of the conduit.

The invention will now be further and more particularly described, by way of example only, and with reference to the accompanying drawings in which:
Figure 1 is a schematic of an embodiment of the HVAC system;
Figure 2 is a schematic of the heat exchange unit;
Figure 3 is a schematic of an embodiment of the HVAC system;
Figure 4 shows a schematic of the vertical axis wind turbine;
Figure 5 shows a first fluid flow path through the vertical axis wind turbine;
Figure 6 shows a second fluid flow path through the vertical axis wind turbine;
Figure 7 shows a third fluid flow path through the vertical axis wind turbine; and
Figure 8 shows a fourth fluid flow path through the vertical axis wind turbine.

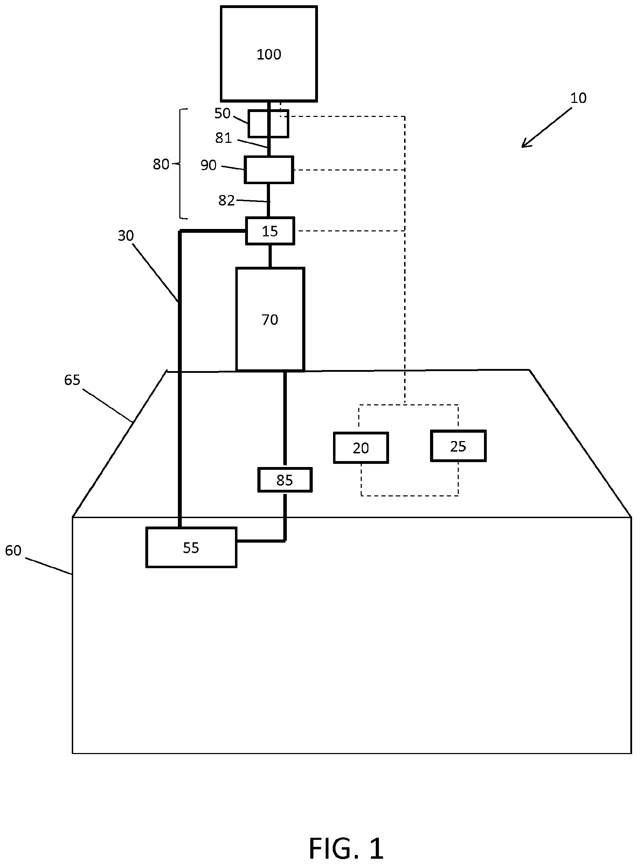

Figure 1 shows an embodiment of the HVAC system 10 comprising a vertical axis wind turbine 100 operably connected to a compressor 15 via a mechanical transmission 80. The compressor 15 is in fluid communication with a heat exchange unit 70, an expansion valve 85 and an evaporator 55 via a conduit 30.

The conduit 30 is configured to receive a fluid, such as a coolant. In some embodiments, the compressor 15 compresses the fluid and consequently causes the fluid to heat up. The compressed fluid then flows into the heat exchange unit 70, wherein the fluid is able to transfer thermal energy into the surrounding external air. The cooled fluid then flows to the evaporator 55 via the expansion valve 85. The expansion valve is configured to reduce the pressure of the fluid, thus further decreasing its temperature.

The mechanical transmission 80 comprises an input shaft 81 rotatably connected between the vertical axis wind turbine 100 and a gearbox 90, wherein the input shaft is configured to transfer rotational energy therebetween. The mechanical transmission also comprises an output shaft 82 rotatably connected between the gearbox 90 and the compressor 15, wherein the output shaft is configured to transfer rotational energy therebetween.

The gearbox 90 comprises a clutch and at least one pair of gears, wherein the pair of gears is configured to adjust the rotational speed of the output shaft relative to the input shaft. The clutch is electronically driven and is configured to engage and disengage the at least one pair of gears. In some embodiments, the clutch may receive electrical energy from the battery 25.

The gearbox comprises an input to output gear ratio of approximately least 10:1. Consequently, the output shaft rotates at approximately ten times the RPM of the input shaft. In some embodiments, the gear ratio may be approximately 2:1, 3:1, 5:1, 8:1, 9:1, 10:1, 11:1, 12:1 or 15:1. In some embodiments, the gearbox comprises a plurality of gear sets and the clutch is configured to engage one of the gear sets at a time.

The compressor 15 may be a reciprocating, rotary, scroll, screw or centrifugal compressor. In some embodiments, the compressor 15 may be a combination of two or more of the aforementioned types of compressor. The compressor 15 comprises a pump configured to generate fluid flow within the conduit.

The system 10 further comprises an energy conversion unit 20 which is operably connected to the vertical axis wind turbine 100, the gearbox 90 and the compressor 15. The energy conversion unit 20 is configured to provide energy to the compressor 15 in a situation where the vertical axis wind turbine 100 is unable to provide sufficient power to operate the compressor 15. This situation may occur upon start-up of the HVAC system 10 and/or when there is insufficient wind to rotate the vertical axis wind turbine 100 at the minimum number of revolutions per minute required to operate the compressor 15.

The HVAC system 10 may further comprise a battery 25. The battery 25 may be connected, directly or indirectly, to the vertical axis wind turbine 100, the compressor 15, and/or the energy conversion unit 20. The battery 25 is configured to store excess energy generated by the vertical axis wind turbine 100.

The energy conversion unit 20 can also act as a generator and convert rotational energy generated by the vertical axis wind turbine into electrical energy. In some embodiments, electrical energy generated by the energy conversion unit 20 is stored in the battery 25. For example, excess energy may be generated when air conditioning, hence the compressor, is not required, such as on a cold day. Alternatively, or additionally, excess energy may be generated when the vertical axis wind turbine is generating more energy than is required by the compressor, such as on a very windy day. The energy conversion unit 20 may therefore convert the excess rotational energy into electrical energy for storage within the battery 25.

The battery 25 is also configured to supply energy to the energy conversion unit 20 and/or compressor 15 when insufficient energy is being generated by the vertical axis wind turbine 100. The system therefore enables the battery to store energy when excess is being produced and then release the energy back into the system when required. This may result in a self-sufficient, off-grid, entirely renewable HVAC system 10.

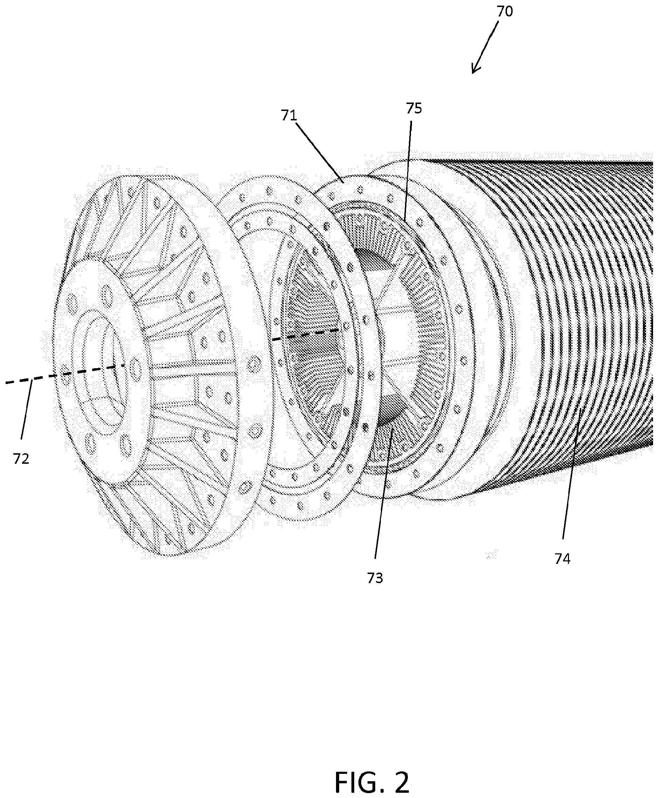

Figure 2 shows the heat exchange unit 70. The heat exchange unit 70 is the central shaft 102, or a portion thereof, of the vertical axis wind turbine. The heat exchange unit comprises a wall 71 that is extruded along a longitudinal axis 72 of the heat exchange unit 70. The wall 71 is manufactured from aluminium. The heat exchange unit comprises a plurality of internal fins 73 located on the internal surfaces of the wall 71. The internal fins 73 are vertical and run substantially parallel with the longitudinal axis 72 of the heat exchange unit 70.

The heat exchange unit further comprises a plurality of external fins 74 located on the external surfaces of the wall 71. The external fins 74 are horizontal and therefore run substantially perpendicular to the longitudinal axis 72 of the heat exchange unit 70.

The heat exchange unit 70 comprises a plurality of conduits 75 located with the wall 71 of the heat exchange unit 70. Each conduit 75 is configured to receive a fluid, such as a coolant. Moreover, each conduit 75 is configured to dissipate heat to the internal and external fins 73, 74 via the wall 71 of the heat exchange unit 70. Each conduit 75 may is in fluid communication with the compressor 15 and the conduit 30.

The heat exchange unit 70 is approximately 7m tall. However, in some embodiments the heat exchange unit may up to, 1m, 3m, 5m, 7m, 9m or more than 9m tall. The diameter of the wall 71 of the heat exchange unit is approximately 0.4m. In some embodiments, the diameter of the wall 71 of the heat exchange unit is up to 0.1m, 0.2m, 0.3m, 0.4m, 0.5m, 0.6m, 0.8m, 1m or more than 1m in diameter.

The internal fins 73 and external fins 74 extend approximately 50mm from the wall 71 of the heat exchange unit. However, in some embodiments, the internal fins 73 and/or the external fins 74 extend up to 10mm, 30mm, 50mm, 70mm, 100mm, 200mm, 300mm or 500mm from the wall 71 of the heat exchange unit 70.

The heat exchange unit may be manufactured by extruding the wall 71 and internal fins 73 simultaneously. The external fins 74 may be produced later by cutting away portions of the external surface of the wall 71 in order to leave behind protrusions in the form of external fins 74. The external fins 74 may be produced on a lathe. Accordingly, the wall 71 may initially be extruded with additional thickness equating to the desired thickness of the wall 71 and desired length of the external fins 74 combined.

The heat exchange unit is configured to transfer up to 9kW of energy from the fluid to the surroundings. In some embodiments, the heat exchange unit is configured to transfer up to 1kW, 2kW, 3kW, 5kW, 7kW, 9kW, 10kW, 12kW, or 15kW of energy from the fluid to the surroundings.

For example, when the outside ambient temperature is approximately 40 degrees Celsius and the average wind speed is approximately 5 meters per second (m/s), the fluid may enter the heat exchange unit at approximately 90 to 110 degrees Celsius and leave the heat exchange unit at approximately 35 to 50 degrees Celsius. In some embodiments, the fluid may enter the heat exchange unit at approximately 95 to 105 degrees Celsius or at approximately 100 degrees Celsius and leave the heat exchange unit at approximately 40 to 45 degrees Celsius or at approximately 43 degrees Celsius.

In some embodiments, the fluid in the conduit leading to the compressor is at a pressure of approximately 1.1 Bar and a temperature of approximately 8 degrees Celsius. Upon leaving the compressor, the fluid is approximately 28Bar and 96 degrees Celsius. The fluid then enters the heat exchange unit wherein heat is transferred to the external environment and the fluid laves the heat exchange unit at approximately 28Bar and 43 degrees Celsius. The fluid then travels to the expansion valve wherein the pressure is reduced to approximately 1.2Bar which results in a temperature of approximately -8 degrees Celsius. The fluid then flows into the evaporator wherein it absorbs heat from the space to be cooled. The fluid then leaves the evaporator at a pressure of approximately 1.1Bar and a temperature of approximately 8 degrees Celsius before returning back to the compressor. This cycle is repeated.

The fluid in the conduit located between the evaporator and the heat exchange unit may be a vapour. The fluid in the conduit between the heat exchange unit and the expansion valve may be a liquid. The fluid in the conduit between the expansion valve and the evaporator may be at least one of a vapour and a liquid.

The skilled person will appreciate that the stated pressures and temperatures may vary by up to 1%, 5%, 10%, 20%, 30%, 50%, 75%, 100% or 200% depending on the temperature of the space to be cooled, the external air temperature, the efficiency of the heat exchange unit and/or the speed of the wind.

The heat exchange 70 unit may comprise a central void wherein services are located.

As illustrated in Figure 1, the vertical axis wind turbine 100 is located on the roof 65 of a building 60. In some embodiments, not illustrated in the accompanying drawings, the vertical axis wind turbine may be located on a wall of a building 60 or on the floor in the vicinity of the building 60.

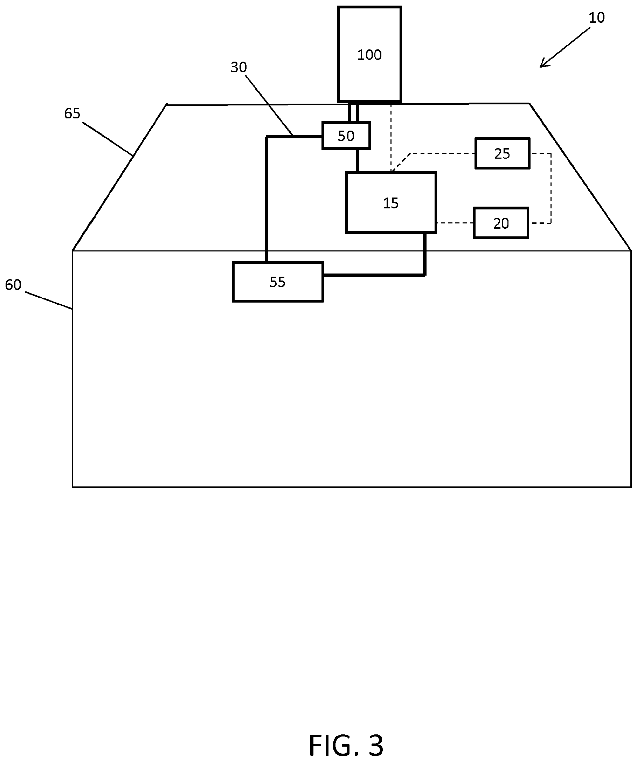

Figure 3 shows an embodiment of the HVAC system 10 comprising a vertical axis wind turbine 100 in fluid communication with an evaporator 55 and a compressor 15, the fluid communication achieved via a conduit 30 comprising at least one rotating fluid joint 50.

In one embodiment, a fluid, such as a coolant, flows within the conduit 30 from the evaporator 55 to the compressor 15, in which the fluid is compressed and, as a result, heated. The compressed fluid then flows in the conduit 30 into the vertical axis wind turbine 100, via at least a first rotating fluid joint 50. Once in the vertical axis wind turbine 100 the fluid within the conduit 30 is able to transfer thermal energy into the surrounding external air before the fluid returns to the evaporator 55 via at least a second rotating fluid joint 50.

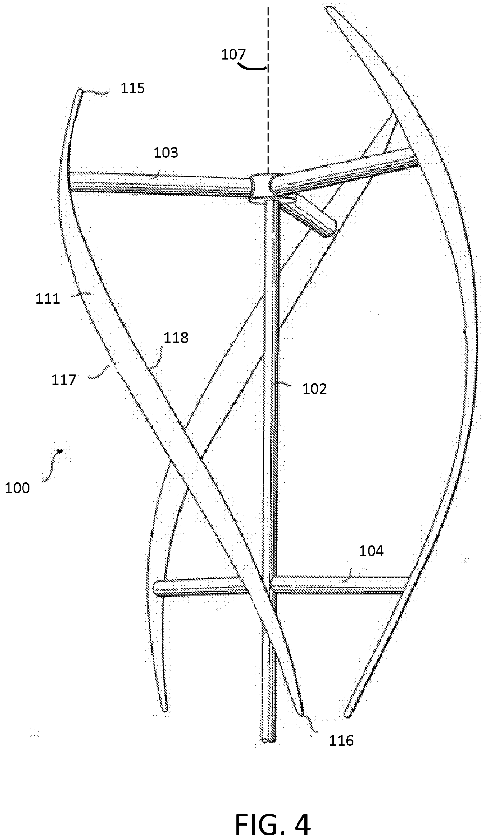

Figure 3 also shows the vertical axis wind turbine directly and operably connected to the compressor 15. As shown in Figure 4, the vertical axis wind turbine 100 comprises a central shaft 102 configured to rotate about a longitudinal axis 107.The shaft 102 may be operably connected to a crank shaft configured to operate at least one piston, the at least on piston being configured to compress the fluid within the compressor 15. Alternatively, or in addition, the shaft 102 may be operably connected to a drive shaft configured to rotate at least one screw, vane, blade or scroll configured to compress the fluid within the compressor 15.

Referring again to Figure 3the compressor 15 is connected to an energy conversion unit 20. The energy conversion unit 20 is configured to provide power to the compressor 15 in a situation where the vertical axis wind turbine 100 is unable to provide sufficient power to operate the compressor 15. This situation may occur upon start-up of the air conditioning system 10 and/or when there is insufficient wind to rotate the vertical axis wind turbine 100 at the minimum number of revolutions per minute required to operate the compressor 15.

The HVAC system may further comprise a battery 25. The battery 25 may be connected, directly or indirectly, to the vertical axis wind turbine 100, the compressor 15, and/or the energy conversion unit 20. When the battery 25 is connected as illustrated in Figure 3, it is configured to store excess energy generated by the vertical axis wind turbine 100. Excess energy may be generated when HVAC, hence the compressor, is not required. Alternatively, or additionally, excess energy may be generated when the vertical axis wind turbine is generating more energy than is required by the compressor, such as on a very windy day.

The battery 25 may be configured to supply energy to the energy conversion unit 20 and/or compressor 15 when insufficient energy is being generated by the vertical axis wind turbine 100. This may enable the battery to store energy when excess is being produced and then release the energy back into the system when require. This may result in a self-sufficient, off-grid, entirely renewable HVAC system 10.

Figures 4 to 8 show a schematic of the vertical axis wind turbine 100.

Each of the plurality of blades may comprise an elongate body 111 having an upper end 115 and a lower end 116, wherein the upper end and the lower end of each blade are rotationally off-set from each other about the longitudinal axis 107 such that each blade has a helical form.

The helical form of the blades 110 ensures that the torque profile of the turbine is smoothed out since a portion of at least one of the three blades 110 is always crossing the ambient wind Wa.

The section of the elongate body 111 of each blade 110, taken perpendicularly to the longitudinal axis 107, may be shaped as an aerofoil having a leading edge 117 and a trailing edge 118 and comprise a camber line (L) defined between the leading edge 117 and the trailing edge 118.

The aerofoil may be arcuately shaped such that the camber line (L) lies along a line of constant curvature having a finite radius of curvature, R'.

The upper and lower ends of each blade 110 may extend past an upper and lower mechanical coupling 103,104, respectively, and the upper and lower ends of each blade 115, 116 may be configured to prevent the flow of fluid above and below the upper and lower mechanical coupling 103, 104, respectively.

Alternatively, the upper and lower end of each blade 115, 116 may extend past an upper and lower mechanical coupling 103,104, respectively, and the upper and lower ends of each blade 115,116 may be at least partially bifurcated.

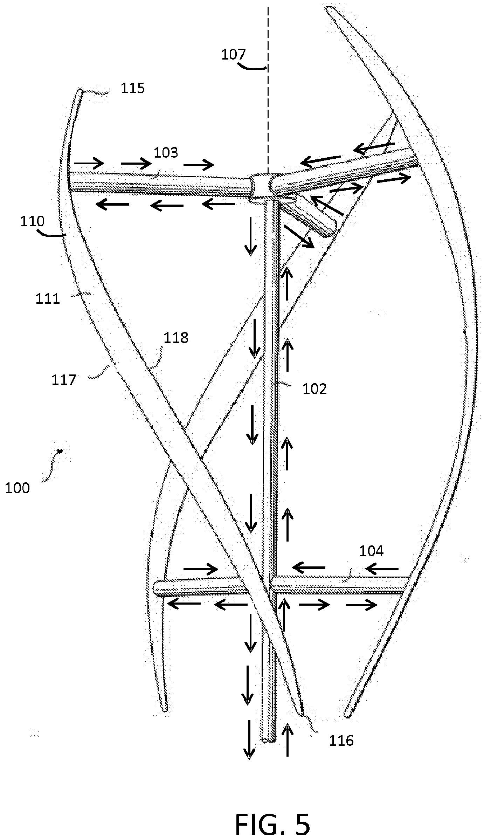

Figures 5 to 8 show four possible fluid flow paths through the vertical axis wind turbine 100.

Figure 5 shows the fluid entering the shaft 102 and flowing up to a plurality of mechanical coupling members. The fluid then flows along each mechanical coupling member to the blade 110 and back again before returning to the shaft 102. Each mechanical coupling member is bifurcated and at least partially insulated to prevent the transfer of heat from areas of warmer fluid flow to areas of cooler fluid flow. Upon returning to the shaft 102, the fluid flows down and out of the vertical axis wind turbine via a secondary, insulated fluid channel within the shaft 102. In one embodiment, the fluid may flow into a plurality of mechanical coupling members before flowing out of the vertical axis wind turbine.

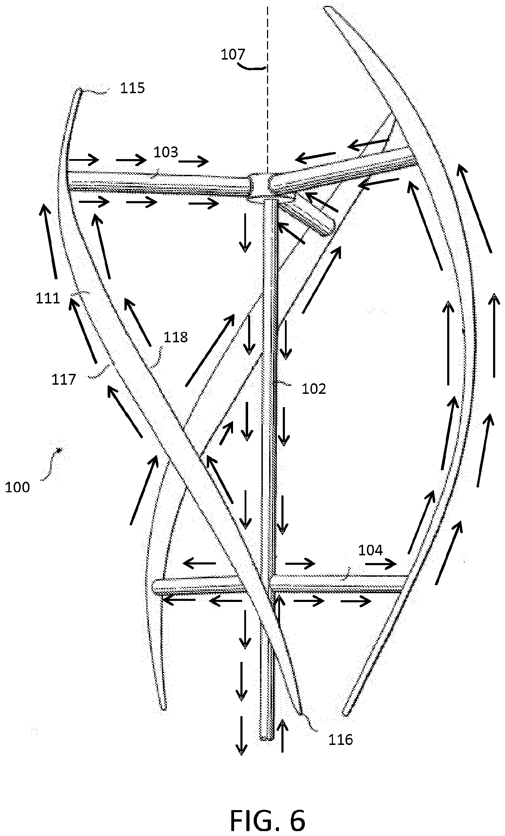

Figure 6 shows the fluid entering the shaft 102 and flowing up to at least one lower mechanical coupling member 104. The fluid then flows along the at least one mechanical coupling member 104 to the blade 110. The fluid then flows up the blade 110 and back to the shaft 102 via an upper mechanical coupling member 103. Upon returning to the shaft 102, the fluid flows down and out of the vertical axis wind turbine via a secondary, insulated fluid channel within the shaft 102.

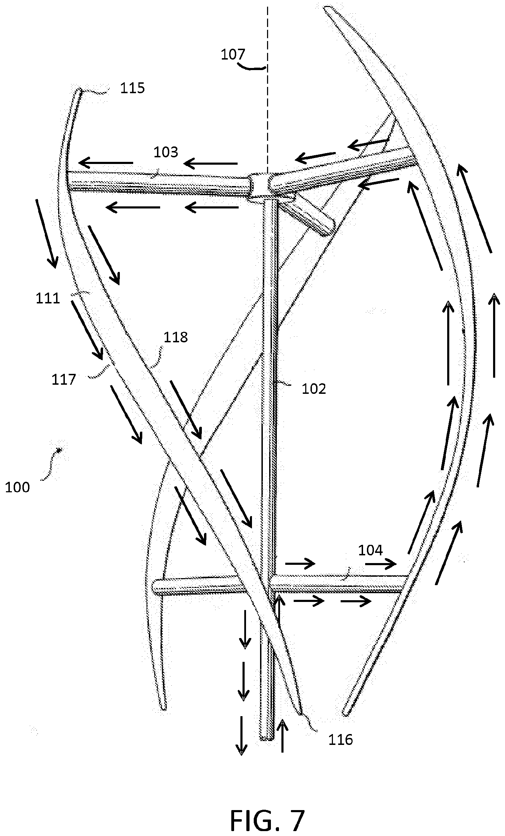

Figure 7 shows the fluid entering the shaft 102 and flowing up to at least one lower mechanical coupling member 104. The fluid then flows along the at least one mechanical coupling member 104 to the blade 110. The fluid then flows up the blade 110 and back to the shaft 102 via an upper mechanical coupling member 103. The fluid then flows across a second upper mechanical coupling member 103 to a second blade 110 before flowing down the second blade 110 to a second lower mechanical coupling member 104. The fluid then flows along the second lower mechanical coupling member 104 and back to the shaft 102. Upon returning to the shaft 102, the fluid flows down and out of the vertical axis wind turbine via a secondary, insulated fluid channel within the shaft 102.

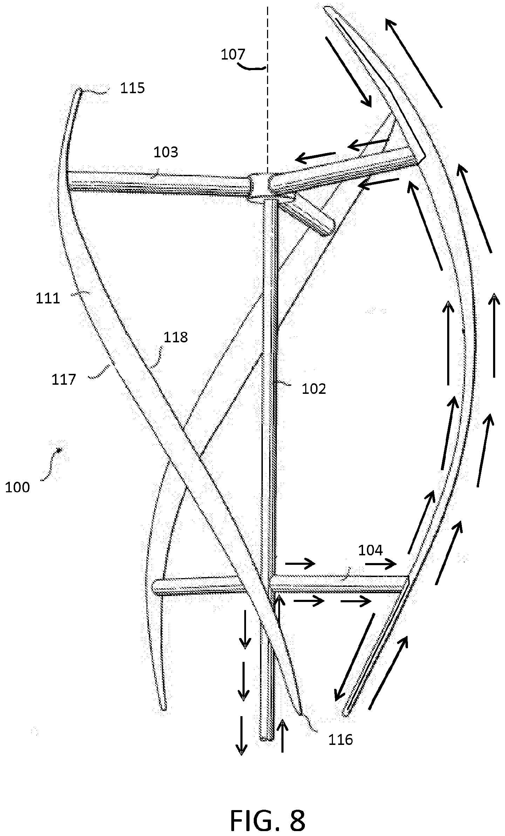

Figure 8 shows fluid entering the shaft 102 and flowing up to at least one lower mechanical coupling member 104. The fluid then flows along the at least one mechanical coupling member 104 to the blade 110. The fluid then flows to the lower end of each blade 116 and then to the upper end of each blade 115, before returning to the shaft 102 via an upper mechanical couple member 103. The upper end of each blade 115 and lower end of each blade 115 may be bifurcated and at least partially insulated to prevent the transfer of thermal energy from areas of warmer fluid to areas of cooler fluid. The fluid within the blade may be unidirectional or may have multiple potential flow paths. Upon returning to the shaft 102, the fluid flows down and out of the vertical axis wind turbine via a secondary, insulated fluid channel within the shaft 102. Alternatively, or in addition, the fluid may flow across a second upper mechanical coupling member 103 to a second blade 110 before flowing down the second blade 110 to a second lower mechanical coupling member 104. The fluid then may flow along the second lower mechanical coupling member 104 and back to the shaft 102. Upon returning to the shaft 102, the fluid may flow down and out of the vertical axis wind turbine via a secondary, insulated fluid channel within the shaft 102.

In each of figures 5 to 8, the fluid flow may be tortuous; the fluid channel and vertical axis wind turbine member may be coterminous; the fluid channel may be at least partially insulated and/or the fluid flow may be reversed. The fluid channel within the vertical axis wind turbine may also be in fluid communication with the conduit 30.

## Claims

1. A HVAC system (10) comprising:
a compressor (15); and
a vertical axis wind turbine (100) configured to provide rotational energy directly to the compressor (15),
wherein the system further comprises:
an energy conversion unit (20) configured to convert excess rotational energy generated by the vertical axis wind turbine (100) into electrical energy, or electrical energy into rotational energy for use within the compressor (15); and
a control unit configured to ensure that the total amount of rotational energy supplied to the compressor (15) is maintained within a predetermined range,
wherein the compressor (15) is configured to receive rotational energy from at least one of the vertical axis wind turbine (100) and the energy conversion unit (20).

2. The system according to claim 1, further comprising a battery (25) configured to store excess energy generated by the energy conversion unit (20).

3. The system according to claim 2, wherein the energy conversion unit (20) is operably connected to the battery (25) and is configured to convert electrical energy provided by the battery (25) into rotational energy for use within the compressor (15).

4. The system according to any preceding claim, wherein the system comprises at least one output configured to receive excess energy.

5. The system according to any preceding claim, further comprising a gearbox (90), wherein the gearbox comprises an input shaft (81) operably connected to the vertical axis wind turbine (100) and an output shaft (82) operably connected to the compressor (15), and wherein the input shaft (81) is operably connected to the output shaft (82) via at least one pair of gears.

6. The system according to claim 5, wherein the gearbox (90) is configured to selectively engage a forward gear configured to rotate the output shaft (82) in a first direction or a reverse gear configured to rotate the output shaft (82) in a second direction.

7. The system according to any preceding claim, wherein the vertical axis wind turbine comprises a shaft (102) rotatable about a longitudinal axis and a plurality of blades mechanically coupled to the shaft.

8. The system according to claim 7, wherein the energy conversion unit (20) is configured to rotate the vertical axis wind turbine (100) about the longitudinal axis at a predetermined number of revolutions per minute.

9. The system according to claim 7 or claim 8, further comprising a conduit (30) configured to contain a fluid for undergoing an evaporation and condensation cycle, wherein the conduit (30) is in fluid communication with the compressor (15).

10. The system according to claim 9, wherein at least a portion of the conduit (30) is coterminous with at least a portion of at least one of the blades.

11. The system according to claim 9 or claim 10, wherein at least a portion of the conduit (30) is tortuous.

12. The system according to any one of claims 9 to 11, further comprising a heat exchange unit (70) in fluid communication with the conduit (30), wherein the heat exchange unit (70) is located within the shaft (102) of the vertical axis wind turbine (100).

13. The system according to any one of claim 9 to 12, further comprising an evaporator (55) in fluid communication with the conduit (30), the evaporator (55) configured to transfer thermal energy from the air within a building (60) to the fluid, wherein the vertical axis wind turbine (100) is configured to be located on a roof (65) of the building (60).

14. The system according to any one of claims 7 to 13, further comprising at least one rotating fluid joint (50) located between the shaft (102) of the vertical axis wind turbine (100) and the compressor (15).

## Patentansprüche

1. HLK-System (10), umfassend:
einen Kompressor (15); und
eine Vertikalachsen-Windkraftanlage (100), die so konfiguriert ist, dass sie Rotationsenergie direkt dem Kompressor (15) bereitstellt,
wobei das System ferner umfasst:
eine Energieumwandlungseinheit (20), die so konfiguriert ist, dass sie überschüssige Rotationsenergie, die von der Vertikalachsen-Windkraftanlage (100) erzeugt wird, in elektrische Energie oder elektrische Energie in Rotationsenergie zur Verwendung innerhalb des Kompressors (15) umwandelt; und
eine Steuereinheit, die so konfiguriert ist, dass sie sicherstellt, dass die Gesamtmenge der dem Kompressor (15) zugeführten Rotationsenergie innerhalb eines vorgegebenen Bereichs gehalten wird, wobei der Kompressor (15) so konfiguriert ist, dass er Rotationsenergie von mindestens einer von der Vertikalachsen-Windkraftanlage (100) und der Energieumwandlungseinheit (20) aufnimmt.

2. System nach Anspruch 1, ferner umfassend eine Batterie (25), die so konfiguriert ist, dass sie überschüssige Energie speichert, die von der Energieumwandlungseinheit (20) erzeugt wird.

3. System nach Anspruch 2, wobei die Energieumwandlungseinheit (20) betriebsfähig mit der Batterie (25) verbunden ist und so konfiguriert ist, dass sie von der Batterie (25) bereitgestellte elektrische Energie in Rotationsenergie zur Verwendung innerhalb des Kompressors (15) umwandelt.

4. System nach einem der vorhergehenden Ansprüche, wobei das System mindestens einen Ausgang umfasst, der so konfiguriert ist, dass er überschüssige Energie aufnimmt.

5. System nach einem der vorhergehenden Ansprüche, ferner umfassend ein Getriebe (90), wobei das Getriebe eine Eingangswelle (81), die betriebsfähig mit der Vertikalachsen-Windkraftanlage (100) verbunden ist, und eine Abtriebswelle (82), die betriebsfähig mit dem Kompressor (15) verbunden ist, umfasst und wobei die Eingangswelle (81) über mindestens ein Paar Zahnräder mit der Abtriebswelle (82) betriebsfähig verbunden ist.

6. System nach Anspruch 5, wobei das Getriebe (90) so konfiguriert ist, dass es selektiv einen Vorwärtsgang, der so konfiguriert ist, dass er die Abtriebswelle (82) in einer ersten Richtung dreht, oder einen Rückwärtsgang, der so konfiguriert ist, dass er die Abtriebswelle (82) in einer zweiten Richtung dreht, einlegt.

7. System nach einem der vorhergehenden Ansprüche, wobei die Vertikalachsen-Windkraftanlage eine Welle (102), die um eine Längsachse drehbar ist, und eine Vielzahl von Schaufeln umfasst, die mechanisch mit der Welle gekoppelt sind.

8. System nach Anspruch 7, wobei die Energieumwandlungseinheit (20) so konfiguriert ist, dass sie die Vertikalachsen-Windkraftanlage (100) mit einer vorgegebenen Anzahl von Umdrehungen pro Minute um die Längsachse dreht.

9. System nach Anspruch 7 oder Anspruch 8, ferner umfassend eine Leitung (30), die so konfiguriert ist, dass sie ein Fluid enthält, das einem Verdampfungs- und Kondensationszyklus unterzogen wird, wobei die Leitung (30) in Fluidkommunikation mit dem Kompressor (15) steht.

10. System nach Anspruch 9, wobei mindestens ein Teil der Leitung (30) an mindestens einen Teil mindestens einer der Schaufeln angrenzend ist.

11. System nach Anspruch 9 oder Anspruch 10, wobei mindestens ein Teil der Leitung (30) gewunden ist.

12. System nach einem der Ansprüche 9 bis 11, ferner umfassend eine Wärmeaustauscheinheit (70), die in Fluidkommunikation mit der Leitung (30) steht, wobei sich die Wärmeaustauscheinheit (70) innerhalb der Welle (102) der Vertikalachsen-Windkraftanlage (100) befindet.

13. System nach einem der Ansprüche 9 bis 12, ferner umfassend einen Verdampfer (55), der in Fluidkommunikation mit der Leitung (30) steht, wobei der Verdampfer (55) so konfiguriert ist, dass er Wärmeenergie aus der Luft innerhalb eines Gebäudes (60) auf das Fluid überträgt, wobei die Vertikalachsen-Windkraftanlage (100) so konfiguriert ist, dass sie sich auf einem Dach (65) des Gebäudes (60) befindet.

14. System nach einem der Ansprüche 7 bis 13, ferner umfassend mindestens eine rotierende Fluidverbindung (50), die zwischen der Welle (102) der Vertikalachsen-Windkraftanlage (100) und dem Kompressor (15) befindet.

## Revendications

1. Système CVC (10) comprenant :
un compresseur (15) ; et
une éolienne à axe vertical (100) conçue pour fournir une énergie de rotation directement au compresseur (15),
dans lequel le système comprend en outre :
une unité de conversion d'énergie (20) conçue pour convertir l'énergie de rotation excédentaire générée par l'éolienne à axe vertical (100) en énergie électrique, ou l'énergie électrique en énergie de rotation à utiliser dans le compresseur (15) ; et
une unité de commande conçue pour garantir que la quantité totale d'énergie de rotation fournie au compresseur (15) soit maintenue dans une plage prédéterminée,
dans lequel le compresseur (15) est conçu pour recevoir une énergie de rotation provenant d'au moins l'une de l'éolienne à axe vertical (100) et l'unité de conversion d'énergie (20).

2. Système selon la revendication 1, comprenant en outre une batterie (25) conçue pour stocker l'énergie excédentaire générée par l'unité de conversion d'énergie (20).

3. Système selon la revendication 2, dans lequel l'unité de conversion d'énergie (20) est connectée de manière fonctionnelle à la batterie (25) et est conçue pour convertir l'énergie électrique fournie par la batterie (25) en énergie de rotation destinée à être utilisée dans le compresseur (15).

4. Système selon l'une quelconque des revendications précédentes, dans lequel le système comprend au moins une sortie conçue pour recevoir l'énergie excédentaire.

5. Système selon l'une quelconque des revendications précédentes, comprenant en outre une boîte de vitesses (90), dans lequel la boîte de vitesses comprend un arbre d'entrée (81) connecté de manière fonctionnelle à l'éolienne à axe vertical (100) et un arbre de sortie (82) connecté de manière fonctionnelle au compresseur (15), et dans lequel l'arbre d'entrée (81) est connecté de manière fonctionnelle à l'arbre de sortie (82) via au moins une paire d'engrenages.

6. Système selon la revendication 5, dans lequel la boîte de vitesses (90) est conçue pour engager sélectivement un rapport de marche avant conçu pour faire tourner l'arbre de sortie (82) dans un premier sens ou un rapport de marche arrière conçu pour faire tourner l'arbre de sortie (82) dans un second sens.

7. Système selon l'une quelconque des revendications précédentes, dans lequel l'éolienne à axe vertical comprend un arbre (102) rotatif autour d'un axe longitudinal et une pluralité de pales couplées mécaniquement à l'arbre.

8. Système selon la revendication 7, dans lequel l'unité de conversion d'énergie (20) est conçue pour faire tourner l'éolienne à axe vertical (100) autour de l'axe longitudinal à un nombre prédéterminé de tours par minute.

9. Système selon la revendication 7 ou la revendication 8, comprenant en outre un conduit (30) conçu pour contenir un fluide destiné à subir un cycle d'évaporation et de condensation, dans lequel le conduit (30) est en communication fluidique avec le compresseur (15).

10. Système selon la revendication 9, dans lequel au moins une partie du conduit (30) est limitrophe à au moins une partie d'au moins une des pales.

11. Système selon la revendication 9 ou la revendication 10, dans lequel au moins une partie du conduit (30) est tortueuse.

12. Système selon l'une quelconque des revendications 9 à 11, comprenant en outre une unité d'échange thermique (70) en communication fluidique avec le conduit (30), dans lequel l'unité d'échange thermique (70) est située à l'intérieur de l'arbre (102) de l'éolienne à axe vertical (100).

13. Système selon l'une quelconque des revendications 9 à 12, comprenant en outre un évaporateur (55) en communication fluidique avec le conduit (30), l'évaporateur (55) étant conçu pour transférer l'énergie thermique provenant de l'air à l'intérieur d'un bâtiment (60) vers le fluide, dans lequel l'éolienne à axe vertical (100) est conçue pour être située sur un toit (65) du bâtiment (60).

14. Système selon l'une quelconque des revendications 7 à 13, comprenant en outre au moins un joint fluidique rotatif (50) situé entre l'arbre (102) de l'éolienne à axe vertical (100) et le compresseur (15).
